# EUROPÄISCHE PATENTSCHRIFT

(11) **EP 0 742 951 B1**
(45) Veröffentlichungstag und Bekanntmachung des Hinweises auf die Patenterteilung: **22.10.1997**
(21) Anmeldenummer: 95908229.8
(22) Anmeldetag: 31.01.1995
(51) Int. Cl.: H01H 39/00, B60R 16/02

(54) **BATTERIE-KABELKLEMME FÜR FAHRZEUGE**
VEHICLE BATTERY CABLE CLAMP
BORNE DE CABLE POUR BATTERIE DE VEHICULE

(30) Priorität: 01.02.1994 DE 4402994; 18.07.1994 DE 4425307
(43) Veröffentlichungstag der Anmeldung: 20.11.1996
(73) Patentinhaber: AUTO-KABEL HAUSEN GmbH & CO. BETRIEBS-KG, D-79688 Hausen (DE)
(72) Erfinder: ALBIEZ, Robert, D-85084 Reichertshofen (DE); GRÖBMAIR, Maximilian, D-83623 Dietramszell (DE); KRAPPEL, Alfred, D-85737 Ismaning (DE); NÖLLE, Günther, D-79541 Lörrach (DE)
(74) Vertreter: Maucher, Wolfgang
(86) Internationale Anmeldenummer: EP9500335
(87) Internationale Veröffentlichungsnummer: WO9521454

(56) Entgegenhaltungen:
- EP-A- 0 398 307
- DE-A- 2 327 261
- FR-A- 2 616 958
- GB-A- 559 923

## Beschreibung

Die Erfindung betrifft eine Batterie-Kabelklemme für Fahrzeuge mit einer Klemmbohrung zur Halterung am Batterieanschlußpol, mit einer angebauten, unfallabhängig betätigbaren Sicherheit-Trennvorrichtung zwischen einer Batterie und einem Bordnetz-Kabelende des Fahrzeuges sowie mit einem Gehäuse der Trennvorrichtung.

Aus DE 30 37 502 C2 ist eine an der Kabelklemme lösbar befestigte Sicherheits-Trennvorrichtung mit einem Trägheitskörper bekannt, der mit einem der Kontaktteile verbunden ist. Diese bauaufwendige Vorrichtung weist funktionelle Nachteile auf, die sich aus Bau-Toleranzen, Alterung und einer systembedingten Richtungsempflindlichkeit ergeben. Durch diese Richtungsempfindlichkeit erfolgt die Kontakt-Trennung nur dann mit ausreichender Sicherheit, wenn bei einem Unfall eine Stoßbeschleunigung in einer Vorzugsrichtung liegt. Bei davon abweichenden Richtungen der unfallbedingten Stoßbeschleunigung erfolgt also die KontaktTrennung nicht mit ausreichender Sicherheit, obwohl dies bei entsprechender Schwere eines Unfalles erforderlich wäre. Dies gilt auch für den sogenannten Heck-Crash mit von hinten auffahrendem Unfallgegner, weil dabei der Trägheitskörper der Trennvorrichtung nicht mit der notwendigen Sicherheit ausreichend ausgelenkt wird, so daß auch dann keine sichere Kontakt-Trennung erfolgt.

Es besteht deshalb die Aufgabe, eine Kabelklemme der eingangs erwähnten Art mit Trennvorrichtung zu schaffen, die konstruktiv einfach ist und die unabhängig von einer präzisen Stoßrichtung im Falle eines Unfalles auch nach längerem Betrieb des Fahrzeuges eine erforderliche Kontakttrennung sicher gewährleistet.

Zur Lösung dieser Aufgabe ist die eingangs genannte Kabelklemme dadurch gekennzeichnet, daß ein feststehender Teil des Gehäuses der Trennvorrichtung an der Kabelklemme einstückig angeformt ist sowie mittels einer trennbaren Befestigungsvorrichtung ein Kabelende des Bordnetzes haltert und daß ein Hilfskraft-Antriebselement zwischen gehäusefesten Wandungen und dem Kabelende derart angeordnet und ausgebildet ist, daß bei dessen Betätigen die Befestigung des Kabelendes gelöst wird, wobei das Hilfskraft-Antriebselement eine Steuerleitung aufweist, die dessen Betätigen in Abhängigkeit von einem Unfall-Sensor je nach Bedarf getrennt von oder gemeinsam mit anderen Sicherheitssystemen bewirkt.

Die einstückige Ausbildung des Gehäuses, der Sicherheits-Trennvorrichtung mit der Batterie-Kabelklemme und die Anwendung eines Hilfkraft-Antriebselementes ermöglichen ohne zusätzliche Befestigungsteile, die Trennvorrichtung mit geringem Bauaufwand funktionssicher und auch bei längerem Gebrauch des Fahrzeuges unverändert wirksam auszubilden. Ferner wird der Montageaufwand gegenüber einer getrennten Anordnung verringert. Die Abstützung des Gewichtes der Trennvorrichtung und ihres mit der Kabelklemme einstückigen Gehäuses kann mittels der Halterung am Batterieanschlußpol erfolgen; zusätzlich kann jedoch die Festlegung auch durch Abstützung gegen die Außenfläche der Batterie erfolgen. Dadurch ergibt sich eine besonders hohe mechanische Stabilität der Anordnung ohne den Bauaufwand eigener Befestigungen der Trennvorrichtung.

Günstig ist es, wenn ein pyrotechnisch wirksames Hilfskraft-Anriebselement vorgesehen ist. Die Verwendung eines durch einen Unfall-Sensor angesteuerten pyrotechnischen Hilfskraft-Antriebselementes in Fahrzeugen ist z.B. bei Airbags bekannt und bewährt. Im vorliegenden Anwendungsfall soll aber nicht in möglichst kurzer Zeit eine große Gasmenge erzeugt werden, sondern es wird die Druckkraftwirkung benötigt und genutzt. Somit können auch andere Hilfskraft-Antriebselemente angewendet werden, wie z.B. Federkraftspeicher, Gas- und/oder Druckluftspeicher.

Durch die DE-OS 21 31 479 ist die Anwendung eines pyrotechnischen Hilfskraft-Antriebselementes bei einer Sicherheitsvorrichtung zum Zerstören einer Fensterscheibe bekannt. Dabei erfolgt die Auslösung dieses Hilfskraft-Antriebselementes stets gleichzeitig mit dem Auslösen des Airbags und dient dazu, den durch den Airbag verursachten Druckanstieg im Innenraum des Fahrzeuges zu vermindern.

Bei der vorliegenden Erfindung soll das Betätigen der Sicherheits-Trennvorrichtung auch unabhängig von dem eines Airbags erfolgen können. Unabhängig bedeutet dabei sowohl in zeitlicher als auch in funtioneller Hinsicht. Zeitlich soll das Auslösen und Betätigen der Sicherheits-Trennvorrichtung nach dem Auslösen und Betätigen der übrigen im Crash-Fall betätigten Systeme stattfinden, insbesondere wenn deren Strombedarf beendet ist. Zu diesen Systemen zählt beispielsweise eine Tür-Zentralverriegelung, ein Notfall-Funksignal und mehrere Airbags für Fahrer und Beifahrer. Funktionell unabhängig soll die Auslösung der Sicherheits-Trennvorrichtung beispielsweise von derjenigen der Airbags, insbesondere bei einem Heck-Crash sein. Ferner soll die Betätigung möglich sein, wenn kein Airbag vorhanden ist. Voraussetzung für die erfindungsgemäßen Funktionen ist lediglich ein geeigneter Unfall-Sensor, der richtungsunabhängig die Schwere eines Fahrzeugunfalls auswertet.

Weitere Ausgestaltungen der Erfindung enthalten die Patentansprüche 3 bis 9. Die Ausbildung nach Patentanspruch 3 ermöglicht einen besonders einfachen mechanischen Aufbau. Die Ausgestaltung nach Anspruch 4 erlaubt es, die lösbaren Verbindungen entsprechend den jeweiligen baulichen und räumlichen Gegebenheiten auszubilden und anzuordnen. Anspruch 5 enthält eine besonders vorteilhafte Ausgestaltung des im Anspruch 4 angegebenen Prinzips mit besonders einfacher Herstellungsmöglichkeit. In Anspruch 6 ist eine Weiterbildung zu Anspruch 4 mit besonders geringem Bauaufwand durch eine noch weitergehende einstückige Ausbildung angegeben.

Die Ausbildung nach Anspruch 7 ermöglicht eine fertigungstechnisch günstige Gesamtanordnung durch die Gleichachsigkeit der beiden zylindrischen Gehäuseaufnahmen und des Kabelendes. Die Ausführungsform nach Anspruch 8 ergibt einen sicherheitstechnisch und funktionell vorteilhaften getrennten Anschluß einerseits des hohe Stromstärken führenden, jedoch elektrisch nicht abgesicherten Motor-Startkabels an der Sicherheits-Trennvorrichtung und andererseits der übrigen relativ geringe Stromstärken führenden, jedoch elektrisch abgesicherten Bordnetzkabel unmittelbar an der Kabelklemme. Dies stellt also eine ganz besonders zweckmäßige Ausgestaltung dar, bei der nach der Betätigung der Trennvorrichtung dennoch bestimmte Verbraucher, die nur geringe Stromstärken benötigen, in Betrieb bleiben können.

Eine ebenfalls wichtige und zweckmäßige Ausgestaltung der Erfindung enthält Anspruch 9, wodurch eine Sicherheit gegen erneute Kontakt-Berührung mit gefährlicher Funkenbildung des abgetrennten Kabelendes mit stromführenden Außenflächen der Kabelklemme erreicht wird. Somit kann nach der erfindungsgemäßen Trennung des Kabels nicht erneut ein Kontakt oder gar eine Funkenbildung und eine daraus resultierende Brandgefahr entstehen.

Eine besonders günstige Ausführungsform der in Anspruch 9 angegebenen Merkmale und Maßnahmen enthält Anspruch 10, wobei ohne bewegliche Teile, gegebenenfalls im Zusammenwirken mit einer bei Batterieklemmen üblichen Isolierabdeckung, ein guter Ausschluß einer gefährlichen Kontaktberührung erreicht wird.

In Patentanspruch 11 ist das Erfindungsprinzip unabhängig von baulichen Gegebenheiten und unabhängig von den vorangehenden Patentansprüchen gekennzeichnet.

In der Zeichnung sind Ausführungsbeispiele der Erfingung dargestellt. Es zeigt in zum Teil schematisierter Darstellung:

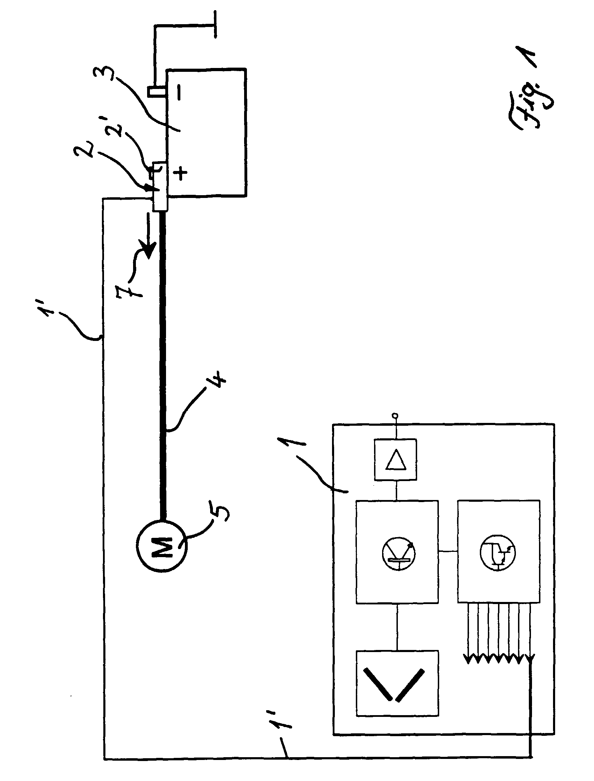

- Fig. 1: Den prinzipiellen Aufbau und die Anordnung der erfindungsgemäßen Batterie-Kabelklemme für Fahrzeuge mit dessen Anschluß-Verbindungen zu Batterie oder Akkumulator und Unfall-Sensor in der Art eines Blockschaltbildes,
- Fig. 2: eine erste Ausführungsform der erfindungsgemäßen Batterie-Kabelklemme mit einem über eine Sollbruch-Verbindung lösbar befestigten Kabelende,
- Fig. 3: eine Ausführungform mit einer zylindrischen Preßverbindung,
- Fig.4: eine Alternative zu Figur 3, die sich in der baulichen Ausgestaltung durch eine gleichachsige Anordnung eines Hilfskraft-Antriebselementes und des Kabelendes von der etwa rechtwinkligen Anordnung der Figur 3 unterscheidet,
- Fig. 5: eine Ausführungsform mit einer hintergreifenden Verbindung und mit einem Abstandhalter gegen eventuelle Kontakt-Wiederberührungen nach einer Trennung sowie
- Fig. 6: eine Alternative zu Figur 5 mit einer Isolierbuchse am Kabelende als Abstandhalter gegen Kontakt-Wiederberührungen nach einer Trennung.

Im Bordnetz eines nicht dargestellten Kraftfahrzeuges befindet sich ein Airbag-Steuergerät 1, das einen an sich bekannten Aufbau besitzt und im wesentlichen eine Entscheidungslogik beinhaltet, die Zündendstufen für verschiedene, nicht dargestellte Airbags und Gurtstraffer ansteuert. Die Entscheidungslogik ist durch einen zwei-kanaligen Crash-Sensor auslösbar, der eine gefährliche Beschleunigung des Fahrzeuges in zwei zueinander senkrechten Richtungen auswertet. Zusätzlich löst das Steuergerät 1 auch andere unfall-bedingte Funktionen aus und wirkt somit als allgemeiner Unfall-Sensor.

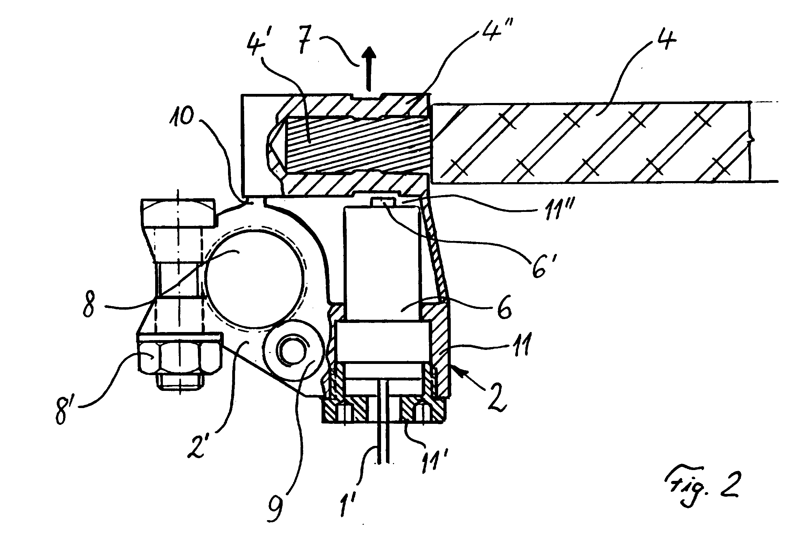

Ein Ausgang der Zündendstufen führt als Steuerleitung 1' zu einer Sicherheits-Trennvorrichtung 2, die einstückig mit einer Batterie-Kabelklemme 2' ausgebildet bzw. verbunden und mit dieser unmittelbar am Pluspol einer Batterie 3 bzw. eines Akkumulators befestigt ist. An der Trennvorrichtung 2 ist ein Motor-Starterkabel 4 zum Motorstarter 5 weitgehend ohne Spannungsabfall und doch derart abtrennbar befestigt, daß es mittels eines in der Trennvorrichtung 2 eingebauten, pyrotechnisch betätigbaren Hilfskraft-Antriebselementes 6 (siehe Figur 2 bis 6) bei einem Unfall-Signalimpuls vom Steuergerät 1 in Pfeilrichtung 7 kontaktfrei abtrennbar ist.

Bei der Ausführungsform nach Figur 2 ist in Draufsicht eine Sicherheits-Trennvorrichtung 2 dargestellt, die in kompakter Anordnung die Batterie-Kabelklemme 2', das Kabelende 4' des querschnitts-starken und elektrisch nicht abgesicherten Motor-Starterkabels 4 und das Hilfskraft-Antriebselement 6 vereinigt. Die Kabelklemme 2' weist in üblicher Ausbildung eine konische Klemmbohrung 8 mit Klemm-Verschraubung 8'und einen Schraubanschluß 9 mit Muttergewinde und Flanschfläche für nicht dargestellte weitere elektrisch abgesicherte Bordnetz-Leitungen auf, insbesondere für Unfall-Wahrnanlagen.

Das Kabelende 4' ist in einer Kabelendhülse 4" mittels Preß- und/oder Löt-Verbindung oder durch eine lösbare Klemmverbindung und dadurch weitestgehend spannungsabfall-frei befestigt. Die Kabelendhülse 4' ist mit der Kabelklemme 2' einstückig über eine Sollbruch-Verbindung 10 verbunden. Das Hilfskraft-Antriebselement 6 ist im Inneren eines Gehäuses 11 der Trennvorrichtung 2 mittels eines Schraubdeckels 11' eingebaut. Das Gehäuse 11 ist sowohl mit der Batterieklemme 2' als auch mit der Kabelendhülse 4' einstückig ausgebildet. Durch eine Öffnung im Schraubdeckel 11' ist das Antriebselement 6 an seine Steuerleitung 1' angeschlossen. In diesem Ausführungsbeispiel ist die Mittelachse des Antriebselementes 6 rechtwinklig zu der der Kabelendhülse 4' und im Abstand zur Sollbruch-Verbindung 10 derart angeordnet, daß die Gasdruckkraft des Antriebselementes 6 im Inneren des Gehäuses 11 oder ein Kolben 6' desselben bei dessen Betätigung das Kabelende 4' mit Kabelendhülse 4" sicher abtrennen und damit den Batterieanschluß des ungesicherten Motor-Starterkabels 4 unterbrechen. Die Trennung erfolgt dabei in Richtung des Pfeiles 7, also quer zur Erstreckungsrichtung des Kabels 4.

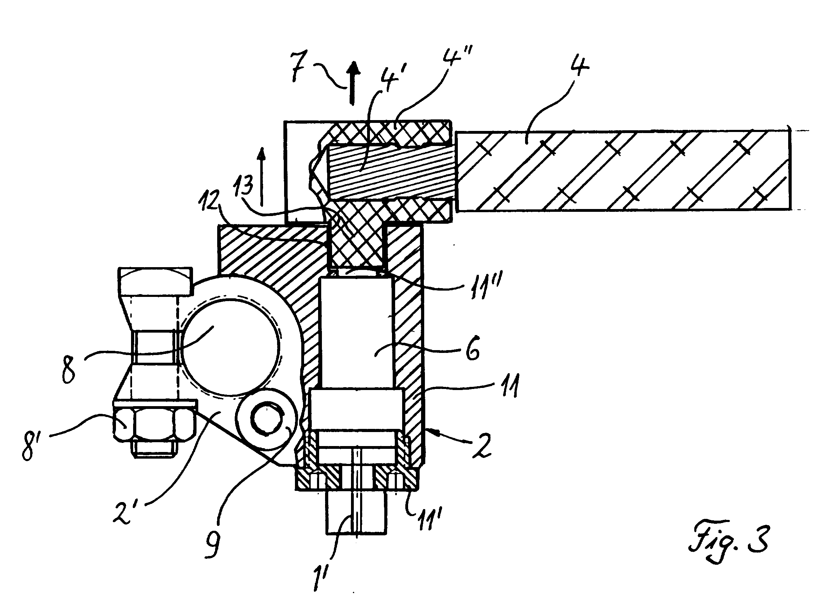

Bei dem Ausführungsbeispiel nach Figur 3 ist abweichend von dem nach Figur 2 die Kabelendhülse 4' an der Kabelklemme 2' und damit am Gehäuse 11 der Trennvorrichtung 2 mittels einer zylindrischen Aufnahme (12, 13) mit Preß- oder Löt-Verbindung befestigt. Diese zylindrische Aufnahme besteht dabei aus einer Bohrung 12 im Gehäuse 11 und einem rechtwinklig zur Kabelendhülse 4' an dieser angeformten Ansatz 13. Der Ansatz 13 greift unter den schon erwähnten Preßsitz oder verlötet in die Bohrung 12 ein.

Bei unfallbedingten Betätigen des auch in diesem Ausführungsbeispiel pyrotechnischen Hilfskraft-Antriebselementes 6 wirkt dessen Gasdruckkraft im Gehäuseinneren 11" und schleudert mit hoher Kraft den Ansatz 13 aus der Bohrung 12, so daß der elektrische Kontakt zwischen dem Gehäuse 11 und damit der Batterie 3 einerseits und der Kabelendhülse 4' und damit dem Motor-Startkabel andererseits sicher unterbrochen wird. Die Trennung in Richtung des Pfeiles 7 erfolgt dabei wiederum quer zur Längserstreckung des Kabels 4.

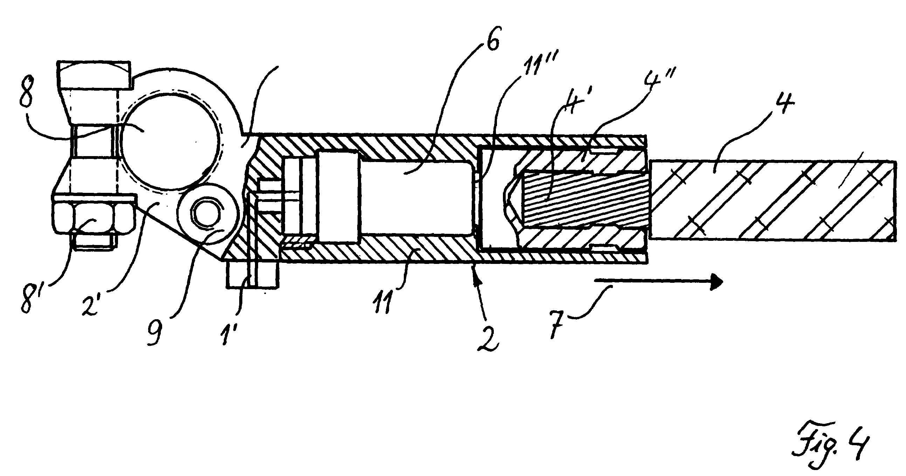

Bei der Ausführungsform nach Figur 4 sind abweichend von denen nach den Figuren 2 und 3 die Kabelendhülse 4' und das Hilfskraft-Antriebselement 6 gleichachsig hintereinander oder in Flucht miteinander angeordnet. Dadurch wirkt die Druckkraft des Antriebselementes 6 im Gehäuseinneren 11" unmittelbar auf eine Stirnfläche der Kabelendhülse 4". Letztere ist unmittelbar mit ihrer zylindrischen Außenfläche im Gehäuse 11 mittels Preß-, Formschluß- und/oder Löt-Verbindung mit auf die Druckkraft aus dem Antriebselement 6 abgestimmter Trennkraft befestigt. Neben besonders geringem Platzbedarf ausschließlich in Richtung des entsprechend verkürzten Motor-Starterkabels 4 ist bei dieser Ausführungsform dadurch und durch Entfall eines seitlichen Ansatzes an der Kabelendhülse 4 und der Kabelhülse 4" auch der Bauaufwand noch weiter verringert. Die Richtung der Trennung gemäß dem Pfeil 7 entspricht dabei der Orientierung des Kabels 4 bzw. seiner Endhülse 4".

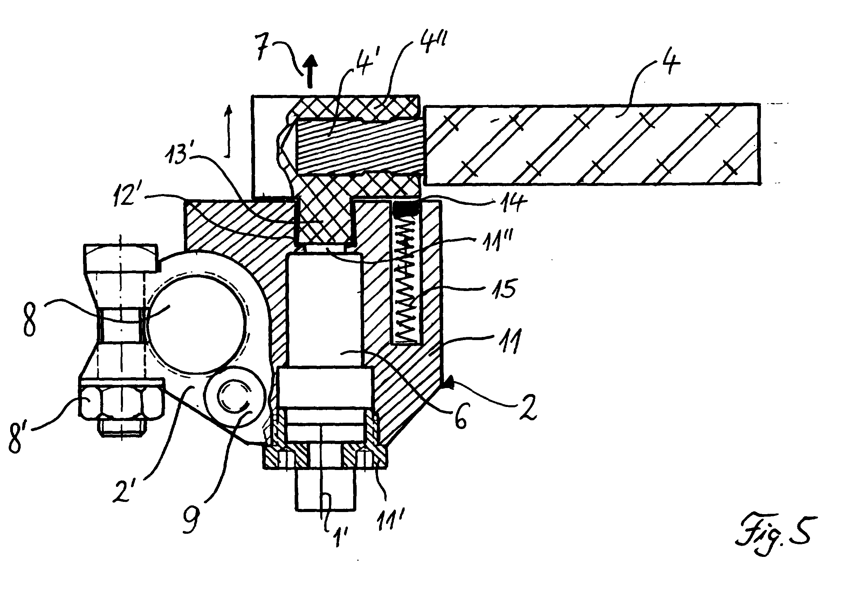

Die Ausführung nach Figur 5 entspricht weitgehend derjenigen nach Figur 3. Sie untercheidet sich lediglich durch die konisch oder schwalbenschwanzförmig hintergreifende Form des seitlich der Kabelendhülse 4" angeformten Ansatzes 13' und durch die damit zusammenwirkende keglige bzw. nutförmige Form der diesen Ansatz 13' aufnehmenden Öffnung 12' im Gehäuse 11 der Trennvorrichtung 2 sowie durch einen Abstandhalter 14 mit Feder 15. Dieser Abstandhalter 14 mit Feder 15 ist im Gehäuse 11 derart gelagert, daß er von der Feder 15 gegen die Kabelendhülse 4'' gedrückt wird und nach einem Abtrennen derselben eine erneute Kontakt-Berührung mit den am Batterie-Pluspol befestigten Bauteile ausgeschlossen ist. Wird die Kabelendhülse 4" in Richtung des Pfeiles 7 abgetrennt, folgt ihr aufgrund der sich nun entspannenden Feder 15 der Abstandhalter 14 und verhindert so das Zurückbewegen der Kabelendhülse 4' in eine Berührposition.

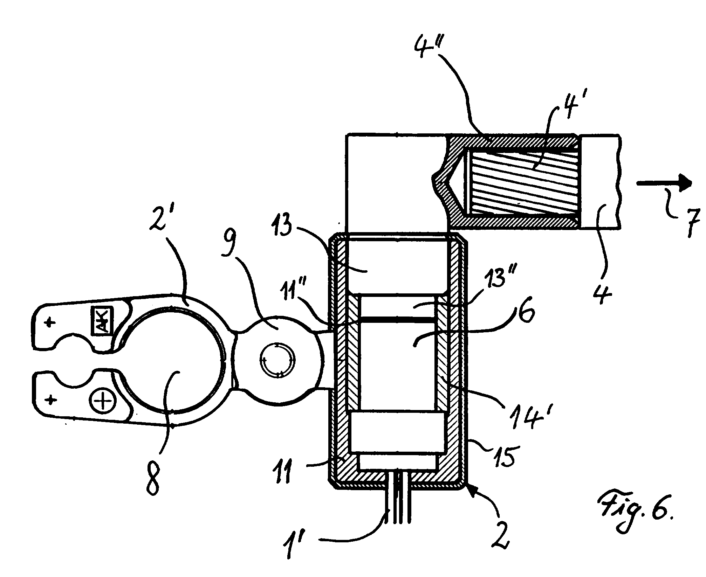

Eine abgewandelte Ausführungsform in Weiterbildung derjenigen nach Figur 5 ist in Figur 6 dargestellt. Durch eine andere Zuordnung und Gestaltung der Hauptbauteile, Kabelklemme 2', Schraub-Anschluß 9 und Trennvorrichtung 2, ist der Materialbedarf und damit Gewicht und Kosten verringert. Dabei ist der SchraubAnschluß 9 zwischen der Kabelklemme 2' und der Trennvorrichtung 2 als mit diesen einstückiges Verbindungsteil ausgebildet und angeordnet und das vorzugsweise zylindrisch ausgebildete Gehäuse 11 der Trennvorrichtung 2 schließt sich daran in etwa symetrischer Querlage an.

Der seitliche zylindrische Ansatz 13 der Kabelendhülse 4" und das Hilfskraft-Antriebselement 6 sind von der Seite des Ansatzes 13 in das abgestuft zylindrische Gehäuse-Innere 11" eingesetzt und ausschließlich mittels der abgestimmten Preß- und/oder Lötverbindung des Ansatzes 13 im Gehäuse 11 axial gehalten.

Als Abstandhalter 14' zur Verhinderung eines Kontaktes nach der Trennung ist eine Isolierbuchse auf dem abgestuften freien Ende 13" des Ansatzes 13 derart befestigt, daß diese beim Ausstoßen des Ansatzes 13 durch die Gasdruckkraft des pyrotechnischen Antriebselementes 6 am Ansatz 13 befestigt bleibt und durch ihre Isolierwirkung eine erneute elektrisch leitende Kontakt-Berührung mit batteriespannung-führenden Bauteilen (2', 9 und 11) verhindert. Das Gehäuse 11 ist zusätzlich mit einer Isolier-Ummantelung 15 überzogen, die auch elektrisch leitende Kontakte bei seitlichen Berührungen mit der Kabelendhülse 4" ausschließt.

Die Batterie-Kabelklemme 2' ist mit dem Gehäuse 11 der Sicherheits-Trennvorrichtung 2 in den vorbeschriebenen Fällen jeweils zu einer kompakten Baueinheit zusammengefaßt und einstückig verbunden. Ein Bordnetz-Kabel, im Ausführungsbeispiel das Motor-Starterkabel 4, ist an der Trennvorrichtung 2 derart befestigt, daß es mittels eines eingebauten Hilfskraft-Antriebselementes 6 bei dessen unfallbedingtem Betätigen aufgrund eines Steuerimpulses von einem Unfall-Sensor, beispielsweise einem Airbag-Steuergerät 1, das dadurch eine Zusatzfunktion erhält, abgetrennt wird und daß mittels eines Abstandhalters 14 bzw. 14' andere elektrisch leitende Berührkontakte erforderlichenfalls verhindert werden können. Die Befestigung der Kabelendhülse 4" an dem Gehäuse 11 könnte gegebenenfalls auch eine Schraubverbindung oder dergleichen sein, wobei die Schraube(n) Sollbruchstellen aufweisen könnten oder die durch das HilfskraftAntriebselement bewirkte Trennung im Bereich des Gegengewindes einer solchen Verschraubung sein könnte. Das Kabelende 4' könnte seinerseits mit der Endhülse 4" mittels Klemmkonus oder einer sonstigen Klemmverbindung lösbar verbunden sein, wobei diese Endhülse 4" ihrerseits dann in der in den Ausführungsbeispielen nach Figur 2 bis 6 dargestellten Weise ausgebildet und mit dem Gehäuse 11 verbunden sein könnte. Dadurch werden Reperaturen ermöglicht, bei denen die gesamte Kabelklemme 2' von Batterie 3 und Kabelende 4' gelöst, zum Beispiel ausgetauscht werden muß.

## Patentansprüche

1. Batterie-Kabelklemme (2') für Fahrzeuge, mit einer Klemmbohrung (8) zur Halterung am Batterieanschlußpol mit einer angebauten unfall-abhängigbetätigbaren Sicherheits-Trennvorrichtung (2) zwischen einer Batterie (3) und einem Bordnetz-Kabelende (4') des Fahrzeuges sowie mit einem Gehäuse (11) der Trennvorrichtung (2), **dadurch gekennzeichnet**, daß ein feststehender Teil des Gehäuses (11) an der Kabelklemme (2') einstückig angeformt ist sowie mittels einer trennbaren Befestigungsvorrichtung (10; 12, 13) ein Kabelende (4') des Bordnetzes haltert und daß ein Hilfskraft-Antriebselement (6) zwischen gehäusefesten Wandungen und dem Kabelende (4') derart angeordnet und ausgebildet ist, daß bei dessen Betätigen die Befestigung des Kabelendes (4') gelöst wird, wobei das Hilfskraft-Antriebselement (6) eine Steuerleitung (1') aufweist, die dessen Betätigen in Abhängigkeit von einem Unfall-Sensor (1) je nach jeweiligem Bedarf getrennt von oder gemeinsam mit anderen Sicherheitssystemen bewirkt.

2. Batterie-Kabelklemme nach Anspruch 1, dadurch gekennzeichnet, daß zwischen dem Kabelende (4') und einem Gehäuse (11) ein pyrotechnisch wirksames Hilfskraft-Antriebselement (6) vorgesehen ist.

3. Kabelklemme nach Anspruch 1 oder 2 dadurch gekennzeichnet, daß die Befestigungsvorrichtung für das Kabelende (4') als mit hoher Trennkraft lösbare Preß-, Formschluß-, Sollbruch-, Löt- oder gleichwertige Verbindung (10; 12, 13) ausgebildet ist und daß das Hilfskraft-Antriebselement (6) derart angeordnet oder ausgebildet ist, daß bei dessen Betätigen diese lösbare Verbindung (10; 12, 13) getrennt wird.

4. Kabelklemme nach einem der Ansprüche 1 bis 3, dadurch gekennzeichnet, daß zwei im wesentlichen zylindrische und etwa rechtwinklig zueinander angeordnete Aufnahmen (Kabelhülse 4", Gehäuse 11) als Halterungen einerseits für das Kabelende (4') und andererseits für das Hilfskraft-Antriebselement (6) vorgesehen oder ausgebildet sind, wobei erstere mittels der lösbaren Verbindung (12, 13) befestigt bzw. über die Sollbruch-Verbindung (10) der Kabelklemme (2') einstückig angeformt ist und letztere einstückig der Kabelklemme (2') angeformt ist.

5. Kabelklemme nach einem der Ansprüche 1 bis 4, dadurch gekennzeichnet, daß die lösbare Verbindung aus einem zylindrischen (13) und/oder zu seinem freien Ende hin sich aufweitenden (13') Ansatz an einer Kabelendhülse (4') quer zu deren Hauptachse und aus einer koaxial zur Hauptachse des Hilfskraft-Antriebselementes (6) angeordneten zylindrischen (12) bzw. hinterschneidenden (12') Aufnahme besteht, die als Preß- und/oder Formschluß-Verbindung zusammenwirken.

6. Kabelklemme nach einem der Ansprüche 1 bis 5, dadurch gekennzeichnet, daß die einstückige Sollbruch-Verbindung (10) in seitlichem Abstand zur Hauptachse des Hilfskraft-Antriebselementes (6) angeordnet ist, so daß die Abstützstelle des letzteren am Kabelende (4)' mit einem Hebelarm zur Sollbruchstelle (10) wirkt.

7. Kabelklemme nach einem der vorstehenden Ansprüche, dadurch gekennzeichnet, daß das Kabelende (4') und das Hilfskraft-Antriebselement (6) in einer zylindrischen Aufnahme (12'') angeordnet sind, wobei ersteres am äußeren und letzteres am inneren Ende der Aufnahme (12') derart angeordnet sind, daß sich die Hilfskraft gegen das innere Ende der Aufnahme (12") sowie gegen das innere Ende des Kabelendes (4') derart abstützt, daß beim Betätigen der Hilfskraft das Kabelende (4') aus der Aufnahme (12") ausgeschoben wird.

8. Kabelklemme nach einem der Ansprüche 1 bis 7, dadurch gekennzeichnet, daß die lösbare Verbindung (10; 12, 13) dem Kabelende (4') eines am Batterie-Pluspol angeschlossenen Motor-Starterkabels (4) zugeordnet ist und daß ein vom Starterkabel-Anschluß unabhängiger Schraubanschluß (9) für andere elektrisch abgesicherte Bordnetzkabel an der Kabelklemme (2') angeformt ist.

9. Kabelklemme nach einem der Ansprüche 1 bis 8, dadurch gekennzeichnet, daß zwischen Kabelklemme (2') und Kabelende (4') ein Abstandhalter (14, 14') derart angeordnet und ausgebildet ist, daß bei gelöstem Kabelende (4') eine Kontaktberührung des letzteren mit der Kabelklemme (2) ausgeschlossen ist.

10. Kabelklemme nach Anspuch 9, dadurch gekennzeichnet, daß der Abstandhalter (14') als Isolierbuchse ausgebildet ist, die an einem abgestuften zylindrischen freien Ende (13") eines Ansatzes (13) an einer Kabelendhülse (4') befestigt ist, über dieses Ende (13") hinausragt und gemeinsam mit dem Kabelende (4') und der Kabelendhülse (4'') von der Kabelklemme mittels der Trennvorrichtung (2) lösbar ist.

11. Battrie-Kabelklemme für Fahrzeuge, mit einer Klemmbohrung (8) zur Halterung am Batterieanschlußpol mit einer eingebauten unfall-abhängig betätigten Sicherheits-Trennvorrichtung (2) zwischen einer Batterie (3) und einem Bordnetzkabelende (4') sowie mit einem Gehäuse (11) der Trennvorrichtung (2), **dadurch gekennzeichnet**, daß ein fester Teil der Trennvorrichtung (2) der Kabelklemme (2') einstückig angeformt ist, daß ein abtrennbarer Teil (Kabelendhülse 4') derselben mit dem Kabelende (4') verbunden ist und/oder von diesem selbst gebildet ist und am festen Teil (11) mittels einer trennbaren Befestigungsvorrichtung (10; 12, 13) gehalten ist und daß zwischen den beiden Teilen ein HilfskraftAntriebselement (6), insbesondere ein pyrotechnisch wirksames oder auslösbares Hilfskraft-Element, angeordnet ist, das bei seinem Betätigen zur Trennung derselben auf beide Teile (4', 11) in entgegengesetzten Richtungen einwirkt und das hierfür eine Steuerleitung (1') aufweist, die dessen Betätigen in Abhängigkeit von einem Unfall-Sensor (1) je nach jeweiligem Bedarf getrennt von oder gemeinsam mit anderen Sicherheitssystemen bewirkt.

## Claims

1. A battery cable clamp 2' for vehicles, with a clamping bore (8) for retention to the battery post, including an attached safety separator (2) which is located between a battery (3) and an on-board cable end (4') of the vehicle and is operable conditioned by an accident, and further including a housing (11) of the separator (2), **characterized in that** a fixed part of the housing (11) is integral with the cable clamp (2') and secures a cable end (4') of the on-board system by means of a separable fastening device (10; 12, 13), and that the configuration and arrangement of an auxiliary drive member (6) between fixed walls of the housing and the cable end (4') is such that when said drive member is actuated the fixation of the cable end (4') is released, wherein the auxiliary drive member (6) has a control line (1') effecting actuation of said drive member in dependence on an accident sensor (1) separately from or together with other safety systems, as required.

2. A battery cable clamp as claimed in claim 1, characterized in that a pyrotechnically acting, auxiliary drive member (6) is provided between the cable end (4') and a housing (11).

3. A cable clamp as claimed in claim 1 or claim 2, characterized in that the fastening device for the cable end (4') takes the form of a press fit, form fit, rupture joint, soldered or equivalent joint (10; 12, 13) disconnectable with high separating force and that the arrangement or configuration of the auxiliary drive member (6) is such that upon actuation thereof said disconnectable joint (10; 12, 13) is separated.

4. A cable clamp as claimed in any one of claims 1 to 3, characterized in that two substantially cylindrical mounts (cable sleeve 4", housing 11) arranged generally at right angles to each other are provided or devised as supports for the cable end (4') on the one hand and for the auxiliary drive member (6) on the other hand, the former mount being fastened by means of the disconnectable joint (12, 13) or being integral with the cable clamp (2') through the rupture joint (10) and the latter mount being integral with the cable clamp (2').

5. A cable clamp as claimed in any one of claims 1 to 4, characterized in that the disconnectable joint consists of a projection that is cylindrical (13) and/or flared (13') towards its free end, located on a cable-end sleeve (4') transversely of the main axis thereof, and further consists of a cylindrical (12) and/or undercut (12') seat arranged coaxially with the main axis of the auxiliary drive member (6), said parts co-operating as a press fit and/or form fit.

6. A cable clamp as claimed in any one of claims 1 to 5, characterized in that the integral rupture joint (10) is arranged laterally spaced from the main axis of the auxiliary drive member (6), so that the supporting point of the latter on the cable end (4') acts with a lever arm relative to the rupture joint (10).

7. A cable clamp as claimed in any one of the preceding claims, characterized in that the cable end (4') and the auxiliary drive member (6) are arranged in a cylindrical mount (12''), wherein the former is arranged at the outer end and the latter is arranged at the inner end of the mount (12') in such a way that the auxiliary drive member is supported against the inner end of the mount (12") and against the inner end of the cable end (4') in such a way that when the auxiliary drive member is actuated the cable end (4') is pushed out of the mount (12").

8. A cable clamp as claimed in any one of claims 1 to 7, characterized in that the disconnectable joint (10; 12, 13) is associated with the cable end (4') of a starter cable (4) connected to the positive pole of the battery and that a screw clamp (9) which is independent of the starter cable connection and serves for other fused on-board cables is integral with the cable clamp (2').

9. A cable clamp as claimed in any one of claims 1 to 8, characterized in that a spacer (14, 14') between cable clamp (2') and cable end (4') is arranged and configured in such a way that when the cable end (4') is released any contact touch of the latter with the cable clamp (2) is precluded.

10. A cable clamp as claimed in claim 9, characterized in that the spacer (14') takes the form of an insulating bush which is fastened to a stepped, cylindrical, free end (13") of a projection (13) on a cable-end sleeve (4'), projects beyond said end (13'') and is disconnectable together with the cable end (4') and the cable-end sleeve (4") from the cable clamp by means of the separator (2).

11. A battery cable clamp for vehicles, with a clamping bore (8) for retention to the battery post, including an incorporated safety separator (2) which is located between a battery (3) and an on-board cable end (4') and is operable conditioned by an accident, and further including a housing (11) of the separator (2), **characterized in that** a fixed part of the separator (2) is integral with the cable clamp (2'), that a separable part (cable-end sleeve 4') thereof is connected to the cable end (4') and/or is formed thereby and is held to the fixed part (11) by means of a separable fastening device (10; 12, 13) and that arranged between the two parts is an auxiliary drive member (6), particularly a pyrotechnically acting or operable auxiliary member, which acts on both parts (4', 11) in opposite directions for separation and has for this purpose a control line (1') effecting actuation of said drive member in dependence on an accident sensor (1) separately from or together with other safety systems, as required.

## Revendications

1. Borne de câble pour batterie (2') destinée à des véhicules, avec un perçage de borne (8) destiné à assurer la fixation sur un pôle de raccordement de batterie, avec un dispositif de sectionneur de sécurité (2) rapporté, pouvant être actionné en cas d'accident, entre une batterie (3) et une extrémité de câble (4') de réseau de bord du véhicule ainsi qu'avec un boîtier (11) du dispositif sectionneur (2), caractérisée en ce qu'une partie fixe du boîtier (11) est formée d'un seul tenant sur la borne de câble (2') et maintient, à l'aide d'un dispositif de fixation (10 ; 12, 13) séparable, une extrémité de câble (4') du réseau de bord, et en ce qu'un élément d'entraînement à force auxiliaire (6) est disposé entre les parois fixées au boîtier et l'extrémité de câble (4') et formé de manière que, lors de son actionnement, la fixation de l'extrémité de câble (4'), soit relâchée, l'élément d'entraînement à force auxiliaire (6) présentant une ligne de commande (1') qui provoque son actionnement en fonction d'un capteur d'accident (1), selon le besoin respectif, séparément du système de sécurité ou en commun avec d'autres systèmes de sécurité.

2. Borne de câble pour batterie selon la revendication 1, caractérisée en ce qu'un élément d'entraînement à force auxiliaire (6) à motricité pyrotechnique est prévu entre l'extrémité de câble (4') et un boîtier (11).

3. Borne de câble pour batterie selon la revendication 1 ou 2, caractérisée en ce que le dispositif de fixation destiné à l'extrémité de câble (4') est réalisé sous forme de liaison (10 ; 12, 13) pouvant être désolidarisée en exerçant une force de séparation élevée, cette liaison étant de nature à pressage à ajustement de forme à points destiné à la rupture, à brasage ou équivalent, et en ce que l'élément d'entraînement à force auxiliaire (6) est disposé ou réalisé de manière que cette liaison (10 ; 12, 13) désolidarisable soit coupée lors de son actionnement.

4. Borne de câble selon l'une des revendications 1 à 3, caractérisée en ce que deux logements, sensiblement cylindriques et disposés à peu près angle droit l'un par rapport à l'autre (douille de câble 4'', boîtier 11), sont prévus ou réalisés, à titre de fixations, d'une part, pour l'extrémité de câble (4') et, d'autre part, pour l'élément d'entraînement à force auxiliaire (6), les premières fixations étant fixés à l'aide de la liaison désolidarisable (12, 13), respectivement formées d'un seul tenant d'une seule pièce par l'intermédiaire de la liaison à points destiné à la rupture (10) de la bande de câble (2'), et les dernières fixations étant formées d'un seul tenant d'une seule pièce sur la borne de câble (2').

5. Borne de câble selon l'une des revendications 1 à 4, caractérisée en ce que la liaison désolidarisable est constituée d'un appendice (13'), de forme cylindrique et/ou allant en s'agrandissant vers son extrémité libre, ménagé sur une douille d'extrémité de câble (4') transversalement par rapport à son axe principal et d'un logement (12), cylindrique ou en contre-dépouille (12'), disposé coaxialement par rapport à l'axe principal de l'élément d'entraînement à force auxiliaire (6) et coopérant pour constituer la liaison à pressage et/ou ajustement de forme.

6. Borne de câble selon l'une des revendications 1 à 5, caractérisée en ce que la liaison à points destinée à la rupture (10) réalisée d'une seule pièce est disposée avec un espacement latéral vis-à-vis de l'axe principal de l'élément d'entraînement à force auxiliaire (6), de manière que le point d'appui de ce dernier agisse sur l'extrémité de câble (4'), par un effet de bras de levier, sur le point destiné à la rupture (10).

7. Borne de câble selon l'une des revendications précédentes, caractérisée en ce que l'extrémité de câble (4') et l'élément d'entraînement à force auxiliaire (6) sont disposés dans un logement cylindrique (12"), le premier élément étant disposé sur l'extrémité extérieure et le dernier élément sur l'extrémité intérieure du logement (12'), de manière que la force auxiliaire prenne appui contre l'extrémité intérieure du logement (12") et contre l'extrémité intérieure de l'extrémité de câble (4'), en ce que l'extrémité de câble est expulsée du logement (12") lors de l'actionnement de la force auxiliaire.

8. Borne de câble selon des revendications 1 à 7, caractérisée en ce que la liaison désolidarisable (10 ; 12, 13) est associée à l'extrémité de câble (4'), d'un câble de démarreur moteur (4) raccordé au pôle positif de la batterie, et en ce qu'un raccordement vissé (9), indépendant du raccordement de câble de démarreur et destiné à d'autres câbles de réseau de bord placés en sécurité électrique, est formé sur la bande de câble (2').

9. Borne de câble selon des revendications 1 à 8, caractérisée en ce qu'un élément d'espacement (14, 14') est disposé et réalisé entre la borne de câble (2') et l'extrémité de câble (4') de manière que, lorsque l'extrémité de câble (4') est relâchée, toute mise en contact mécanique, provoquant un contact électrique de cette dernière avec la bande de câble (2), soit exclue.

10. Borne de câble selon la revendication 9, caractérisée en ce que le support d'espacement (14') est réalisé sous forme de douille isolante, fixée sur une extrémité libre (13") cylindrique étagée d'un appendice (13) sur une douille d'extrémité de câble (4'), en sortant au-dessus de cette extrémité (13") et désolidarisable de la borne de câble, au moyen du dispositif sectionneur (2), conjointement avec l'extrémité de câble (4') et la douille d'extrémité de câble (4").

11. Borne de câble pour batterie pour véhicule équipée d'un perçage de borne (8) destiné à la fixation sur le pôle de raccordement, avec un dispositif sectionneur (2) de sécurité intégré, actionné en fonction d'un accident, entre une batterie (3) et une extrémité de câble de réseau de bord (4') ainsi qu'avec un boîtier (11) du dispositif sectionneur (2), caractérisée en qu'une partie fixe du dispositif sectionneur (2) de la borne de câble (2') en étant formée d'un seul tenant, en ce qu'une partie pouvant être coupée (douille d'extrémité de câble 4') de celle-ci, est reliée à l'extrémité de câble (4') et/ou est constituée par celle-ci elle-même et est maintenue sur la partie fixe (11), au moyen d'un dispositif de fixation (10 ; 12, 13) séparable, et en ce que, entre les deux parties, est disposé un élément d'entraînement à force auxiliaire (6), en particulier un élément à force auxiliaire agissant ou pouvant être déclenché de façon pyrotechnique, qui, lors de son actionnement, agit, dans des sens opposés, pour assurer la séparation de celui-ci sur les deux parties (4', 11) et présente à cette fin une ligne de commande (1') qui provoque son actionnement en fonction d'un capteur d'accident (1) selon un besoin respectif, séparément du système de sécurité ou bien conjointement avec d'autres systèmes de sécurité.
